# DEMANDE DE BREVET EUROPEEN

(11) **EP 0 848 129 A1**
(43) Date de publication de la demande: **17.06.1998**
(21) Numéro de dépôt: 97121561.1
(22) Date de dépôt: 08.12.1997
(51) Int. Cl.: E05F 15/00, E06B 11/04, H02G 5/04

(54) **Portail automatique comportant un système de sécurité embarqué**

(30) Priorité: 16.12.1996 FR 9615689
(71) Demandeur: Snaf Eurl, 83130 La Garde (FR)
(72) Inventeur: Hellal, Nacer, 83000 Toulon (FR)
(74) Mandataire: Marchand, André

(57) **Abrégé**

Système (20) de portail automatique comprenant un portail (2) glissant ou roulant, un moteur (5) d'entraînement du portail au moyen d'un pignon coopérant avec une crémaillère (6) solidaire du portail, un système de sécurité (3) embarqué sur le portail, un circuit électronique (7) de commande du moteur (5) et un système de liaison électrique pour connecter le système de sécurité embarqué (3) au circuit de commande (7). Selon l'invention, le système de liaison électrique comprend au moins un moyen conducteur longitudinal (21) monté isolé sur la partie basse du portail et s'étendant parallèlement à la crémaillère (6), et un bras de contact (22) dont l'extrémité coopère avec le moyen conducteur longitudinal pour former un contact glissant.

## Description

La présente invention concerne un système de portail automatique comprenant un portail, un système de sécurité embarqué sur le portail, un moteur et un moyen d'entraînement du portail, comme une crémaillère, un circuit électronique de commande du moteur et une liaison électrique entre le système de sécurité embarqué et le circuit de commande.

Ces dernières années, on a vu se généraliser l'installation de portes et de portails automatiques ou semi-automatiques aux entrées des garages collectifs publics ou privés.

En raison des accidents pouvant survenir à la fermeture d'une porte ou d'un portail automatique, notamment lorsque des enfants se trouvent à proximité, ces systèmes font l'objet d'une réglementation sévère exigeant notamment l'installation d'un système de sécurité du type barre palpeuse.

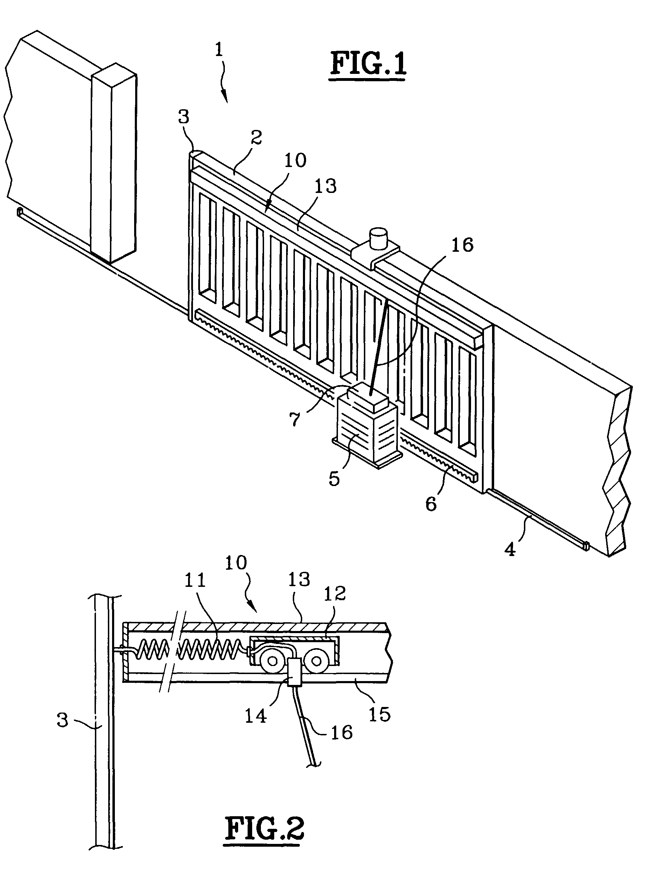

La figure 1 représente un système classique 1 de portail 2 à fermeture automatique pourvu d'une barre palpeuse 3. Le portail 2 est monté glissant ou roulant sur un rail 4 de guidage et est entraîné à la fermeture ou à l'ouverture par un moteur 5 dont l'axe est pourvu d'un pignon (non visible sur la figure) coopérant avec une crémaillère 6 solidaire du portail. La barre palpeuse 3 est fixée sur le chant du portail et est connectée à un circuit électronique 7 de commande du moteur 5 se trouvant dans un coffret de protection. Le circuit de commande 7 comprend des circuits de sécurité prévus pour inverser le sens de déplacement du portail si un objet vient au contact de la barre palpeuse 3 lors de la fermeture du portail.

Le connexion électrique de la barre palpeuse 3 au circuit de commande 7 est assurée classiquement par un système de liaison électrique 10 dont la structure interne est représentée en figure 2. Le système 10 comprend un câble électrique en spirale 11 et un chariot d'entraînement 12 disposés dans un profilé métallique creux 13 fixé à la partie supérieure du portail (figure 1). Le chariot 12 est équipé d'un boîtier d'interconnexion 14 dont la partie inférieure se prolonge à l'extérieur du profilé 13 au travers d'une fente 15 de guidage du chariot 12. Une extrémité du câble en spirale 11 est connectée à la barre palpeuse 3 et son autre extrémité au boîtier d'interconnexion 14. La partie inférieure du boîtier d'interconnexion 14 est connectée à un câble électrique souple 16 conduisant au circuit de commande 7.

Le chariot 12 étant accroché au câble électrique 16, le câble en spirale 11 se déroule lorsque le portail se referme en entraînant le profilé 13, et retrouve progressivement sa fort spiralée par effet élastique quand le portail s'ouvre à nouveau.

Ce système 10 de liaison électrique de l'art antérieur présente les inconvénients d'être coûteux, encombrant et de nuire à l'esthétique du portail.

Notamment, la présence du câble souple 16 s'étendant entre le profilé 13 et le circuit de commande 7 n'est pas appréciée par les usagers. Pour pallier cet inconvénient, on a songé à dissimuler le câble 16 dans un guide rigide, par exemple une colonne creuse s'étendent du sol jusqu'à la zone où se trouve le chariot 12, mais la réglementation en matière de sécurité impose alors l'ajout d'une barre palpeuse de part et d'autre du guide rigide en raison des risques de cisaillement des mains ou des bras dus à la proximité des barreaux du portail.

D'autre part, ce système de liaison électrique classique 10 ne peut être fixé à la partie la plus basse du portail en raison de son encombrement et du faible espacement entre le capot du moteur 5 et le portail 2 (de l'ordre de quelques centimètres).

La présente invention vise à pallier ces inconvénients.

Plus particulièrement, un objectif de la présente invention est de prévoir un système de porte ou portail automatique qui soit d'un coût de revient plus avantageux et d' un aspect plus esthétique que les systèmes de l'art antérieur.

Cet objectif est atteint grâce à un système de portail automatique du type décrit ci-dessus dans lequel la liaison électrique comprend au moins un moyen conducteur longitudinal monté isolé sur le portail et s'étendant sensiblement horizontalement, et un bras de contact dont l'extrémité coopère avec le moyen conducteur longitudinal pour former un contact glissant.

Selon un mode de réalisation, la liaison électrique entre le système de sécurité embarqué et le circuit de commande est également assurée par l'intermédiaire du châssis métallique du portail et d'un rail de guidage du portail, le portail étant équipé d'un balai de contact frottant sur le rail de guidage.

Selon un mode de réalisation, le moyen conducteur longitudinal est un câble métallique.

Selon un mode de réalisation, le moyen conducteur est une bande métallique.

Selon un mode de réalisation, la liaison électrique comprend au moins deux bandes métalliques portées par un support en matière isolante fixé au portail, et deux bras de contact coopérant avec les bandes métalliques pour former au moins deux contacts glissants.

Avantageusement, les bandes métalliques sont agencées sur des faces opposées du support isolant et les deux bras de contact sont agencés de manière à former une sorte de pince serrant le support aux endroits où se trouvent les bandes métalliques.

Ces caractéristiques et avantages ainsi que d'autres de la présente invention seront exposées plus en détail dans la description suivante d'exemples de réalisation d'un système de portail automatique selon l'invention, faite en relation avec les figures jointes parmi lesquelles :
- la figure 1 précédemment décrite représente un système de portail automatique selon l'art antérieur,
- la figure 2 précédemment décrite représente la structure interne d'un système de liaison électrique classique visible sur le portail de la figure 1,
- la figure 3 représente un premier mode de réalisation d'un système de portail automatique selon la présente invention,
- la figure 4 est une vue en coupe du système de portail automatique de la figure 3,
- la figure 5 est une vue en coupe d'un élément du système de portail automatique de la figure 3,
- la figure 6 représente un second mode de réalisation d'un système de portail automatique selon l'invention, et
- la figure 7 illustre une variante du mode de réalisation de la figure 6.

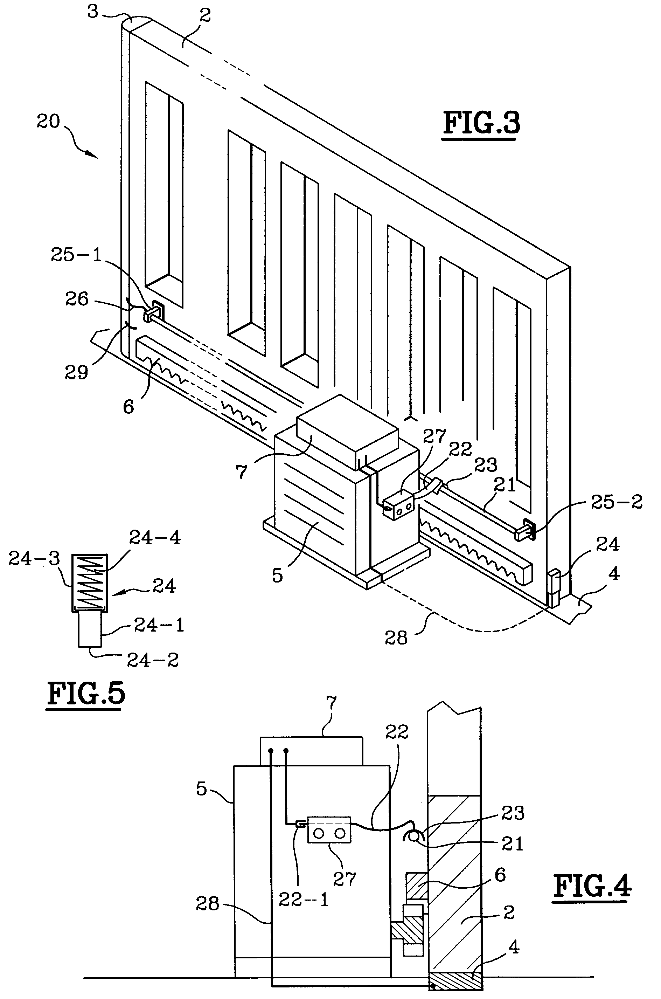

Les figures 3 et 4 représentent respectivement par une vue en perpective et une vue en coupe un système de portail automatique selon l'invention. On y retrouve le portail 2 équipé d'une barre palpeuse 3, le rail 4 de guidage du portail, le moteur 5 et son circuit de code 7 protégé par un coffret.

Selon l'invention, une première liaison électrique entre la barre palpeuse 3 et le circuit de commande 7 est assurée par l'intermédiaire d'un câble métallique 21, solidaire du portail 2, et d'un bras de contact 22. Le bras 22 comporte à son extrémité distale un balai 23 en fer doux coopérant par frottement avec le câble 21 lors des déplacements du portail et assurant ainsi un contact électrique continu et glissant.

Le câble métallique 21 est maintenu à ses extrémités par deux bras isolants 25-1, 25-2 et s'étend horizontalement sur presque toute la longueur du portail, parallèlement à la crémaillère 6. Il est connecté à une première borne de branchement de la barre palpeuse, par l'intermédiaire d'un fil électrique 26. Le bras de contact 22 est ici lame semi-élastique conductrice en fer galvanisé et le balai frotteur 23 une pièce conductrice en U soudée au bras 22 et épousant sensiblement la forme du câble 21. Le bras de contact 22 est noyé partiellement dans un bloc de fixation 27 en matière plastique fixé à l'un des flanc du capot du moteur. L'extrémité proximale du bras 22 forme une languette mâle 22-1 connectée à une première borne électrique du circuit de commande 7.

Selon un aspect de la présente invention, une autre liaison électrique de la barre palpeuse 3 au circuit de commande 7 est assurée par l'intermédiaire du châssis métallique du portail 2 et du rail 4, grâce à un balai métallique 24 solidaire du portail 2 et venant frotter contre le rail 4. Ainsi, une deuxième borne électrique du circuit de commande 7 est connectée au rail 4 par un fil électrique 28, de préférence enterré. Le balai frotteur 24 transmet la liaison électrique au châssis du portail 2 qui est connecté à une deuxième borne de branchement de la barre palpeuse 2 au moyen d'un fil électrique 29 que l'on aperçoit en figure 3.

La figure 5 représente par une vue en coupe un exemple de réalisation du balai frotteur 24, au moyen d'une pièce 24-1 portant un sabot de contact 24-2 en fer doux. La pièce 24-1 est montée coulissante dans une pièce 24-3 solidaire du portail 2 et est maintenue au contact du rail 4 par un ressort comprimé 24-4.

Si l'on compare l'aspect du système 20 selon l'invention à celui de la figure 1, on voit que l'on a considérablement amélioré l'esthétique de l'ensemble tout en bénéficiant d'une grande simplicité de réalisation.

Le faible encombrement du câble métallique 21 permet en effet de le fixer à la partie inférieure du portail 2, comme représenté sur les figures 3 et 4, dans la zone dépourvue de barreaux se trouvant en regard du capot du moteur 5. Le bras de contact 22 étant par ailleurs fixé sur un flanc du capot du moteur 5, l'ensemble demeure très discret. On notera en outre que le câble 21 et le bras de contact 22 n'ont pas été représentés à l'échelle sur les figures 3 et 4 dans un souci de lisibilité de ces figures, et sont dans la pratique d'une taille plus réduite. L'esthétique de l'ensemble peut encore être améliorée par la prévision d'une cornière protégeant le câble 21 des intempéries et le dissimulant des regards.

Bien entendu, l'utilisation du portail 2 et du rail 4 comme deuxième moyen de liaison électrique est un aspect optionnel de l'invention, deux câbles métalliques selon l'invention pouvant être disposés côte à côte.

Il apparaîtra clairement à l'homme de l'art que le système de l'invention peut faire l'objet de nombreuses variantes et perfectionnements.

En particulier, le bras de contact 22 peut être pourvu d'une articulation, être disposé verticalement, comprendre plusieurs balais frotteurs, etc.

Egalement, le câble peut être remplacé par une tringle ou une barre métallique, ou bien encore par une bande métallique.

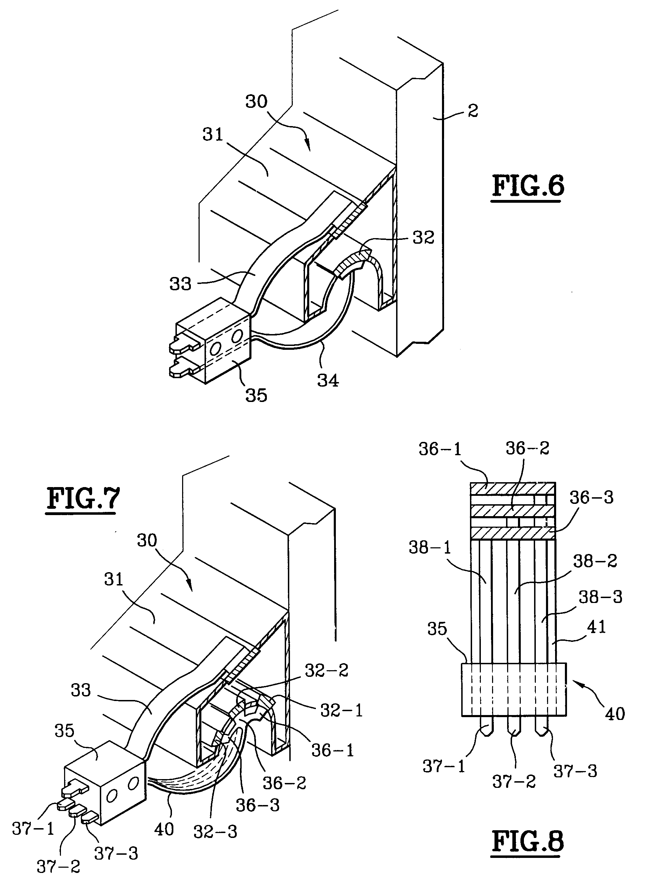

Ainsi, la figure 6 représente par une vue en perpective partielle une variante de réalisation de la présente invention dans laquelle le portail 2 est équipe d'un profilé 30 en P.V.C. supportant deux bandes conductrices 31, 32, de préférence en métal inoxydable, chaque bande 31, 32 est connectée à une borne de branchement de la barre palpeuse 2 (non représenté). Le profilé 30, de faible encombrement, est monté sur la partie basse du portail 2 (par exemple au moyen de rivets) et s'étend longitudinalement sur une longueur choisie en fonction de la course maximale du portail. Un contact glissant avec chaque bande 31, 32 est assuré par des bras de contact 33, 34, ici des lames semi-élastiques du type décrit ci-dessus comportant à leur extrémité distale des balais plats en fer doux ou charbon.

Selon le mode de réalisation représenté, les bandes conductrices 31, 32 sont disposées sur deux faces opposées du profilé 30 et les bras de contact 33, 34 sont agencés de manière que leurs extrémités distales forment une sorte de pince élastique pinçant le profilé 30 aux endroits où se trouvent les bandes 31, 32. Ici, les bras 33, 34 sont emprisonnés partiellement dans un bloc de fixation 35 en matière plastique et leurs extrémités proximales dépassent du bloc 35 pour former deux languettes mâles permettant de les connecter au circuit de commande du moteur. La face supérieure du profilé 30 portant la bande 31 est sensiblement inclinée afin de favoriser l'écoulement de l'eau (une cornière de protection peut toutefois être prévue) et la face inférieure du profilé portant la bande 32 est en forme de U inversé afin de diminuer l'encombrement de l'ensemble. Bien entendu, l'homme de l'art pourra prévoir de nombreuses autres formes de profilé et d'autres dispositions des bandes conductrices 31, 32.

On rappellera maintenant que les barres palpeuses incorporent généralement un interrupteur de type NF (normalement fermé) qui s'ouvre en cas d'écrasement de la barre palpeuse et dont l'état d'ouverture ou de fermeture est surveillé par le circuit de commande du moteur. Une barre palpeuse comprend ainsi au moins les deux bornes de branchement précédemment décrites, pour la connexion d'un tel interrupteur. Les barres palpeuses à câble ne nécessitent aucune autre connexion, l'écrasement du câble agissant directement sur un levier actionnant l'interrupteur. Le système de liaison électrique selon l'invention n'emporte donc aucun risque d'électrocution, la détection de l'état de fermeture ou d'ouverture de l'interrupteur étant réalisée au moyen d'un faible courant, de l'ordre de quelques mA.

De plus, dans ce cas particulier de la barre palpeuse à câble où l'on ne cherche qu'à détecter l'état d'ouverture ou de fermeture d'un interrupteur, le contact glissant obtenu en figures 3 et 4 par frottement du balai 23 sur le câble 21 peut être remplacé de façon équivalente par un contact glissant sans frottement, du type à induction, obtenu au moyen d'une bobine excitée par une tension alternative placée à l'extrémité du bras 22 à la place du balai frotteur 23.

D'autres barres palpeuses comme les barres palpeuses à détection d'obstacle par coupure d'un faisceau infrarouge présentent en outre deux bornes électriques basse tension (généralement 24 V) pour alimenter un émetteur et un récepteur infrarouge. Ce type de barre palpeuse nécessite ainsi une quadruple connexion.

Une telle connexion multiple peut être assurée par le système de l'invention d'une manière simple illustrée par la figure 7. Dans le mode de réalisation représenté, la face inférieure du profilé 30 porte trois bandes conductrices 32-1, 32-2, 32-3 et l'extrémité distale du bras de contact inférieur 40 porte trois balais en fer doux 36-1, 36-2, 36-3.

La figure 8 est une vue de dessus du bras inférieur 40. Le bras 40 est réalisé à partir d'une matière isolante 41 (ou une matière comportant un revêtement isolant) portant trois lames métalliques 38-1, 38-2, 38-3, chacune étant connectée à l'un des balais 36-1 à 36-3. L'extrémité des lames métalliques 38-1 à 38-3 s'étend au-delà du bloc de fixation 35 en matière plastique pour former trois languettes mâles 37-1, 37-2, 37-3 de connexion.

On voit ici que la forme en U inversé de la face inférieure du profilé 30 forme un logement offrant une bonne protection contre les risques de courts-circuits entre les diverses bandes conductrices, par exemple dans le cas où un objet métallique viendrait accidentellement toucher le profilé 30.

Bien que dans ce qui précède l'on ait décrit l'invention dans le cadre de la connexion électrique d'une barre palpeuse à un circuit de commande d'un moteur, il est bien évident que la présente invention est susceptible d'autres applications, et permet la connexion de tout type d'élément électrique embarqué sur un portail mobile, par exemple une lampe basse tension ou tout moyen de sécurité autre qu'une barre palpeuse.

Egalement, la crémaillère permettant l'entraînement du portail peut être une crémaillère à chaîne, comme on en rencontre parfois, ou tout autre moyen d'entraînement.

## Revendications

1. Système (20) de portail automatique comprenant un portail (2), un système de sécurité (3) embarqué sur le portail, un moteur (5) et un moyen (6) d'entraînement du portail, un circuit (7) de commande du moteur (5) et une liaison électrique entre le système de sécurité embarqué (3) et le circuit de commande (7), caractérisé en ce que ladite liaison électrique comprend au moins un moyen conducteur longitudinal (21, 31, 32, 32-1, 32-2, 32-3) monté isolé sur le portail (2) et s'étendant sensiblement horizontalement, et un bras de contact (22, 33, 34, 40) dont l'extrémité (23, 36-1, 36-2, 36-3) coopère avec le moyen conducteur longitudinal pour former un contact glissant.

2. Système selon la revendication 1, dans lequel la liaison électrique entre le système de sécurité embarqué (3) et le circuit de commande (7) est également assurée par l'intermédiaire du châssis métallique du portail (2) et d'un rail (4) de guidage du portail, le portail étant équipe d'un balai de contact (24) frottant sur le rail de guidage (4).

3. Système selon l'une des revendications 1 et 2, dans lequel le moyen conducteur longitudinal est un câble métallique (21).

4. Système selon l'une des revendications 1 et 2, dans lequel le moyen conducteur est une bande métallique (31, 32, 32-1, 32-2, 32-3).

5. Système selon l'une des revendications 1 et 2, dans lequel la liaison électrique comprend au moins deux bandes métalliques (31, 32, 32-1, 32-2, 32-3) portées par un support (30) en matière isolante fixé au portail, et deux bras de contact (33, 34) coopérant avec les bandes métalliques pour former au moins deux contacts glissants.

6. Système selon la revendication 5, dans lequel les bandes métalliques (31, 32, 32-1, 32-2, 32-3) sont agencées sur des faces opposées du support isolant (30) et les deux bras de contact (33, 34) sont agencés de manière à former une sorte de pince serrant le support (30) aux endroits où se trouvent les zones portant les bandes métalliques.

7. Système selon la revendication 6, dans lequel une face du support isolant porte plusieurs bandes métalliques (32-1, 32-2, 32-3).

8. Système selon l'une des revendications 6 et 7, dans lequel une face du support isolant (30) est en forme de U inversé.

9. Système selon l'une des revendications précédentes, comprenant un bras de contact (22, 33, 34) comportant une lame métallique semi-élastique.

10. Système selon la revendication 9, dans lequel la lame métallique du bras est partiellement noyée dans un bloc de fixation (27, 35) en matière plastique, et son extrémité proximale forme une languette mâle de connexion.
